# EUROPEAN PATENT SPECIFICATION

(11) **EP 4 142 933 B1**
(45) Date of publication and mention of the grant of the patent: **02.12.2026**
(21) Application number: 21797741.2
(22) Date of filing: 26.04.2021
(51) Int. Cl.: B01J 23/18, B01J 23/20, C01B 3/02, C25B 1/04, C25B 11/031, C25B 11/054, C25B 11/061, C25B 11/091

(54) **FAST AMBIENT-TEMPERATURE SYNTHESIS OF OER CATALYSTS FOR WATER ELECTROLYSIS**
SCHNELLE SYNTHESE VON OER-KATALYSATOREN BEI UMGEBUNGSTEMPERATUR FÜR DIE WASSERELEKTROLYSE
SYNTHÈSE RAPIDE À TEMPÉRATURE AMBIANTE DE CATALYSEURS OER POUR L'ÉLECTROLYSE DE L'EAU

(30) Priority: 28.04.2020 US 202063016490 P
(43) Date of publication of application: 08.03.2023
(73) Proprietor: University of Houston System, Houston, Texas 77204 (US)
(72) Inventor: REN, Zhifeng, Pearland, Texas 77584 (US); YU, Luo, Houston, Texas 77054 (US); CHEN, Shuo, Houston, Texas 77030 (US)
(74) Representative: Beck Greener LLP
(86) International application number: PCT/US2021/029109
(87) International publication number: WO 2021/222077

(56) References cited:
- WO-A1-2019/160701
- CN-A- 104 659 357
- CN-A- 105 970 265
- CN-A- 107 335 450
- CN-A- 108 842 165
- CN-A- 108 842 165
- CN-A- 109 652 822
- KR-A- 20190 031 035
- FANG MING ET AL: "Hierarchical NiMo-based 3D electrocatalysts for highly-efficient hydrogen evolution in alkaline conditions", NANO ENERGY, vol. 27, 1 September 2016 (2016-09-01), NL, pages 247 - 254, XP055869779, ISSN: 2211-2855, DOI: 10.1016/j.nanoen.2016.07.005
- FANG MING, GAO WEI, DONG GUOFA, XIA ZHAOMING, YIP SENPO, QIN YUANBIN, QU YONGQUAN, HO JOHNNY C.: "Hierarchical NiMo-based 3D electrocatalysts for highly-efficient hydrogen evolution in alkaline conditions", NANO ENERGY, ELSEVIER, NL, vol. 27, 1 September 2016 (2016-09-01), NL , pages 247 - 254, XP055869779, ISSN: 2211-2855, DOI: 10.1016/j.nanoen.2016.07.005
- ZHANG XIN, ZHAO YUFEI, ZHAO YUNXUAN, SHI RUN, WATERHOUSE GEOFFREY I. N., ZHANG TIERUI: "A Simple Synthetic Strategy toward Defect‐Rich Porous Monolayer NiFe‐Layered Double Hydroxide Nanosheets for Efficient Electrocatalytic Water Oxidation", ADVANCED ENERGY MATERIALS, WILEY - V C H VERLAG GMBH & CO. KGAA, DE, vol. 9, no. 24, 1 June 2019 (2019-06-01), DE , pages 1900881, XP055869786, ISSN: 1614-6832, DOI: 10.1002/aenm.201900881
- WU LIBO, YU LUO, XIAO XIN, ZHANG FANGHAO, SONG SHAOWEI, CHEN SHUO, REN ZHIFENG: "Recent Advances in Self-Supported Layered Double Hydroxides for Oxygen Evolution Reaction", RESEARCH, vol. 2020, 19 February 2020 (2020-02-19), pages 1 - 17, XP055869791, DOI: 10.34133/2020/3976278
- YAN LI, XINFA WEI, LISONG CHEN, JIANLIN SHI, MINGYUAN HE: "Nickel-molybdenum nitride nanoplate electrocatalysts for concurrent electrolytic hydrogen and formate productions", NATURE COMMUNICATIONS, vol. 10, no. 1, 1 December 2019 (2019-12-01), XP055697800, DOI: 10.1038/s41467-019-13375-z

## Description

### CROSS REFERENCE TO RELATED APPLICATIONS

This application claims the benefit of and priority to U.S. Provisional Application No. 63/016,490, filed on April 28, 2020.

### TECHNICAL FIELD

The present disclosure relates to electrolysis of water, and more specifically, to fast ambient-temperature synthesis of catalysts for water electrolysis.

### BACKGROUND

Water electrolysis is a sustainable and clean route to produce hydrogen (H₂) fuel, which is an important component of renewable-energy. Principally, water electrolysis includes two half-reactions: the hydrogen evolution reaction (HER) on the cathode and the oxygen evolution reaction (OER) on the anode. Compared with the HER process, OER is more sluggish because of the rigid O-O double bond and the multistep proton and electron transfer process, which hampers the overall efficiency of water electrolysis. There has been progress in developing efficient OER catalysts in order to decrease the OER overpotentials, including developing efficient OER catalysts that prevail over the benchmark of iridium and ruthenium dioxides (IrO₂ and RuO₂), which largely expedites the uphill water electrolysis process.

While there has been interest in developing efficient catalysts, little attention has been paid to energy and time costs of synthesizing the catalysts. For example, MoNi₄/MoO₂ is the most active HER catalyst reported and requires overpotentials of only 15 and ~70 mV at current densities of 10 and 500 mA cm⁻², respectively. However, synthesizing this catalyst entails a multistep procedure that is conducted over a long period of time at high temperatures and that even requires the consumption of high-purity H₂ gas, which is not economic for large-scale applications. The issue of high synthesis costs also applies to synthesis of many reported OER catalysts, which typically involves tedious multistep procedures under high temperature and requires significant time and energy consumption. Accordingly, the present disclosure considers OER catalyst efficiency as well as synthesis costs.

CN 108 842 165 A and WO 2019/160701 A1 disclose catalysts for water electrolysis and their method of synthesis.

### SUMMARY

Embodiments of the present disclosure are described in detail with reference to the drawings wherein like reference numerals identify similar or identical elements.

The present disclosure relates to fast ambient-temperature synthesis of OER catalysts for water electrolysis.

The invention is as defined in the appended claims. According to the invention, a method for ambient-temperature synthesis of catalysts for water electrolysis includes dissolving amounts of Fe(NO₃)₃·9H₂O and Na₂S₂O₃·5H₂O in deionized water at ambient temperature to form a solution, placing Ni foam into the solution where the Ni foam serves as a substrate and a Ni source for growth of sulfur-doped (Ni,Fe)OOH (S-(Ni,Fe)OOH) catalysts, leaving the Ni foam in the solution at ambient temperature for a duration between one minute and five minutes to provide a treated foam where the S-(Ni,Fe)OOH catalysts grow on the substrate during the duration, and removing the treated foam from the solution after the duration.

In various embodiments of the method, the method includes collecting the S-(Ni,Fe)OOH catalysts, and directly using the collected S-(Ni,Fe)OOH catalysts as oxygen evolution reaction (OER) electrodes.

In various embodiments of the method, the method includes etching a smooth surface of the Ni foam into nanoparticle layers with multiple levels of porosity.

In various embodiments of the method, surfaces of the treated foam include cracks having nanoparticles and having macropores that are less than ten micrometers in size. In various embodiments of the method, the nanoparticles are porous and have mesopores of about 20 nm - 50 nm in size.

In various embodiments of the method, in the treated foam, sulfur exists on the surface of and in a lattice of the S-(Ni,Fe)OOH catalysts.

In various embodiments of the method, the method includes etching a surface of the Ni foam into a porous S-(Ni,Fe)OOH layer, the layer having Ni(OH)₂ and FeOOH and having sulfur residing on the surface and doped into a lattice of the layer. The S-(Ni,Fe)OOH layer is hydrophilic and contributes to release of gas bubbles during electrolysis.

In various embodiments of the method, dissolving amounts of Fe(NO₃)₃·9H₂O and Na₂S₂O₃·5H₂O in deionized water at ambient temperature includes dissolving 0.1*x-0.5x* grams of Fe(NO₃)₃·9H₂O and 0.02*x*-0.3*x* grams of Na₂S₂O₃·5H₂O in 10x mL of deionized water, for a value *x*.

In aspects of the present invention, a water electrolyzer is as defined in independent claim 10. A water electrolyzer includes an anode formed by a sulfur-doped (Ni,Fe)OOH (S-(Ni,Fe)OOH) electrode and a cathode formed by NiMoN nanowire arrays supported on Ni foam.

In various embodiments of the water electrolyzer, the water electrolyzer includes an alkaline natural seawater electrolyte.

In various embodiments of the water electrolyzer, a voltage of less than two volts between the anode and the cathode provides a current density of 1000 mA cm⁻². In various embodiments of the water electrolyzer, the voltage is approximately 1.951 volts.

In various embodiments of the water electrolyzer, a voltage between the anode and the cathode for providing a current density of 500 mA cm⁻² remains below 2 volts throughout one-hundred hours of continuous water electrolysis. In various embodiments of the water electrolyzer, the voltage for providing the current density of 500 mA cm⁻² changes by less than 1 mV per hour during the one-hundred hours of continuous water electrolysis.

In various embodiments of the water electrolyzer, the S-(Ni,Fe)OOH electrode is capable of delivering at least one of: a current density of 100 mA cm⁻² at an overpotential of 300 mV, a current density of 500 mA cm⁻² at an overpotential of 398 mV, or a current density of 1000 mA cm⁻² at an overpotential of 462 mV in alkaline seawater electrolyte.

### BRIEF DESCRIPTION OF THE DRAWINGS

A better understanding of the features and advantages of the disclosed technology will be obtained by reference to the following detailed description that sets forth illustrative embodiments, in which the principles of the technology are utilized, and the accompanying drawings of which:
FIG. 1 is a diagram of an exemplary two-electrode electrolyzer for alkaline seawater electrolysis, in accordance with aspects of the present disclosure;
FIG. 2 is a flow diagram of an exemplary operation for synthesizing S-(Ni,Fe)OOH catalysts at ambient temperature, in accordance with aspects of the present disclosure;
FIG. 3 is a diagram of images of exemplary surface morphology before and after a five-minute synthesis operation according to FIG. 2, in accordance with aspects of the present disclosure;
FIGS. 4A and 4B are diagrams of further images of exemplary surface morphology, in accordance with aspects of the present disclosure;
FIG. 5 is a diagram of further images of exemplary surface morphology for varying durations of synthesis operation according to FIG. 2, in accordance with aspects of the present disclosure;
FIGS. 6A-6F are diagrams of exemplary X-ray diffraction (XRD) pattern of S-(Ni,Fe)OOH and X-ray photoelectron spectroscopy (XPS) measurements, in accordance with aspects of the present disclosure;
FIGS. 7A-7H are diagrams of graphs relating to exemplary electrocatalytic OER performance of the catalyst in different electrolytes, in accordance with aspects of the present disclosure;
FIG. 8 is a diagram of exemplary surface morphology and nanostructure of the catalyst after OER stability test in seawater electrolyte, in accordance with aspects of the present disclosure;
FIG. 9 is a further diagram of exemplary 3D surface topography of the catalyst after OER stability test in seawater electrolyte, in accordance with aspects of the present disclosure;
FIG. 10 is another diagram of exemplary surface morphology and nanostructure of the catalyst after OER stability test in seawater electrolyte, in accordance with aspects of the present disclosure;
FIGS. 11A-11B are diagrams of exemplary high-resolution XPS spectra after OER stability test in seawater electrolyte, in accordance with aspects of the present disclosure;
FIGS. 12A-12D are diagrams of exemplary overall seawater splitting performance graphs for the electrolyzer of FIG. 1, in accordance with aspects of the present disclosure; and
FIG. 13 is a diagram of exemplary performance for the electrolyzer of FIG. 1 with and without iR compensation, in accordance with aspects of the present disclosure.
Further details and aspects of various embodiments of the present disclosure are described in more detail below with reference to the appended figures.

### DETAILED DESCRIPTION

Although the present disclosure will be described in terms of specific embodiments, it will be readily apparent to those skilled in this art that various modifications, rearrangements, and substitutions may be made without departing from the present disclosure.

For purposes of promoting an understanding of the principles of the present disclosure, reference will be made to exemplary embodiments illustrated in the drawings, and specific language will be used to describe the same. It will nevertheless be understood that no limitation of the scope of the present disclosure is thereby intended. Any alterations and further modifications of the features illustrated herein, and any additional applications of the principles of the present disclosure as illustrated herein, which would occur to one skilled in the relevant art and having possession of this disclosure, are to be considered within the scope of the present disclosure.

The present disclosure relates to fast ambient-temperature synthesis of OER catalysts for water electrolysis. Aspects of the present disclosure relate to a fast, cost-effective, and scalable method to synthesize NiFe-based (oxy)hydroxide catalysts at ambient temperature for high performance seawater electrolysis. Although aspects of the present disclosure will be described below with respect to seawater electrolysis, the aspects and embodiments described herein are applicable to fresh water and to water from sources other than natural seawater. All such applications of water electrolysis are contemplated to be within the scope of the present disclosure.

Generally, efficient catalysts for water electrolysis include transition-metal oxides, (oxy)hydroxides, selenides, phosphides, and nitrides. Among these catalysts, the transition-metal (oxy)hydroxides, and especially the NiFe-based (oxy)hydroxides, are the most efficient oxygen evolution reaction (OER) catalysts, and they are the catalytically active species generated from surface reconstruction on many types of oxygen-evolving materials.

There are various strategies to promote the OER activity of NiFe-based (oxy)hydroxide catalysts, including morphology design to expose more active sites, surface defect engineering to regulate the electronic structure, and integration with carbon materials to improve electron transfer. For example, NiFe (oxy)hydroxides derived from NiFe disulfides can be coupled with carbon nanotubes for efficient OER in alkaline media. This catalyst requires an overpotential of 190 mV at a current density of 10 mA cm⁻² and is one of the OER catalysts that reduce the overpotential needed for the current density of 10 mA cm⁻² to below 200 mV. As another example, a core-shell catalyst of NiFe alloy (core) and ultrathin amorphous NiFe oxyhydroxide (shell) nanowire arrays, exhibits OER activity with overpotentials of 248 and 258 mV required to achieve large current densities of 500 and 1000 mA cm⁻², respectively, and meets industrial criteria of large current densities ≥ 500 mA cm⁻² at overpotentials ≤ 300 mV. As persons skilled in the art will recognize, higher current density corresponds to higher hydrogen production rate. Therefore, such examples of efficient catalysts can significantly advance the development of water electrolysis for large-scale hydrogen production, if lower time and energy costs of synthesizing the catalysts can be implemented.

An abundant supply of water for electrolysis is seawater. Compared with splitting purified water, seawater electrolysis is an effort that has greater benefits because it can be used for both hydrogen generation and seawater desalination. However, seawater electrolysis is dependent on highly active and robust OER catalysts that can sustain seawater splitting without chloride corrosion and that can do so over a large range of salinity. As reactions occur, the salt concentration in the water increases and, therefore, the catalyst should have sufficient catalytic activity across a range of salinity.

As explained in more detail below, the present disclosure relates to NiFe-based (oxy)hydroxide catalysts for high-performance seawater electrolysis and provides cost-effective and facile methodologies to synthesize such catalysts at ambient temperatures. In summary, a one-step synthesis method is disclosed to fabricate highly porous, self-supported S-doped Ni/Fe (oxy)hydroxide (denoted herein as S-(Ni,Fe)OOH) catalysts from readily available Ni foam in one to five minutes at ambient temperature. This fast synthesis method operates to engineer the surface of Ni foam into a hydrophilic S-doped Ni/Fe (oxy)hydroxide layer, which exhibits multiple levels of porosity with a large surface area and numerous active sites. Unlike prior electrodeposition or hydrothermal methods that result in weak contact between the catalyst and the substrate, the Ni foam in the disclosed synthesis method is directly reacted with a solution and quickly etched to produce the Ni/Fe (oxy)hydroxide layer, which produces highly robust contact and strong bonds and contributes to rapid electron transfer and good stability. In addition, sulfur is introduced on the surface and in the lattice of the Ni/Fe (oxy)hydroxide during the reaction, which may tune the valence state of Ni/Fe and optimize the absorption energy of the OER intermediates, thus improving OER activity.

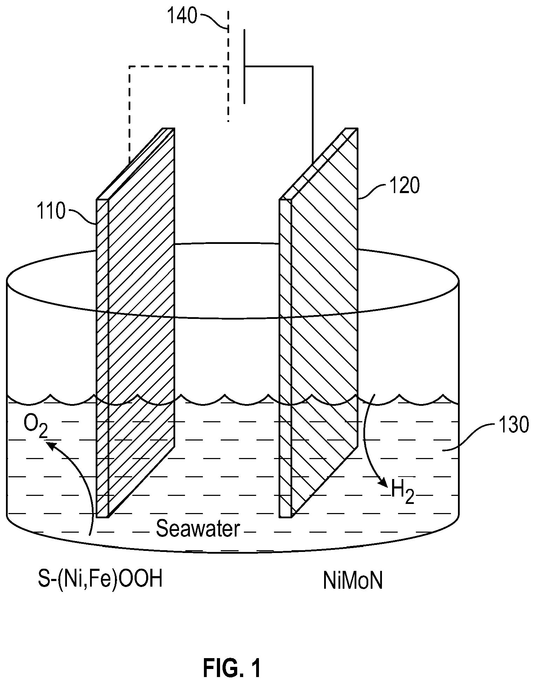

FIG. 1 shows an exemplary two-electrode electrolyzer for alkaline seawater electrolysis. In the illustrated configuration, a S-doped Ni/Fe (oxy)hydroxide catalyst is directly used as an OER electrode 110. This OER electrode is paired with a HER electrode 120 formed by a HER catalyst of NiMoN, in 1 M KOH plus seawater electrolyte 130. The illustrated two-electrode electrolyzer can achieve current densities of 500 and 1000 mA cm⁻² at voltages 140 of 1.837 V and 1.951 V, respectively, and exhibit very good durability.

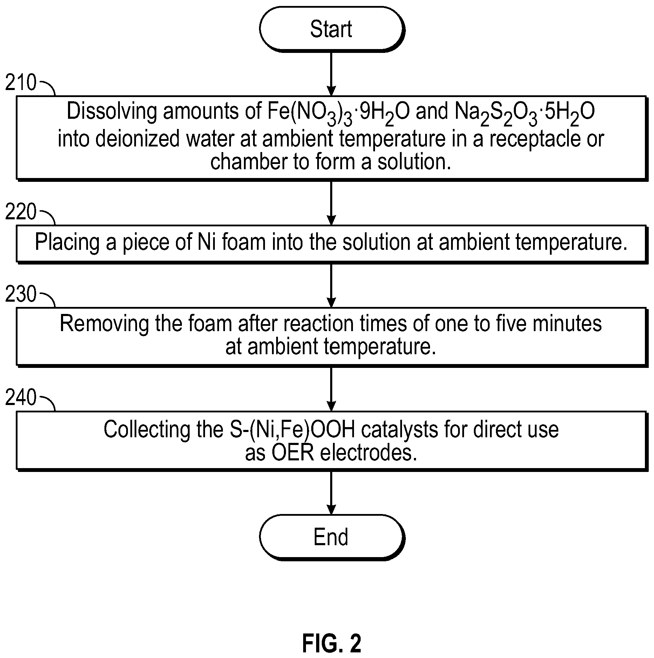

FIG. 2 shows a flow diagram of an exemplary operation for synthesizing the S-doped Ni/Fe (oxy)hydroxide (S-(Ni,Fe)OOH) catalysts at ambient temperature. At block 210, the operation includes dissolving amounts of Fe(NO₃)₃·9H₂O and Na₂S₂O₃·5H₂O into deionized water at ambient temperature in a receptacle or chamber to form a solution. For example, 0.35 g Fe(NO₃)₃·9H₂O and 0.05 g Na₂S₂O₃·5H₂O can be dissolved into 10 mL deionized water in a glassy bottle. In various embodiments, the amounts can range from 0.1-0.5 grams of Fe(NO₃)₃·9H₂O and 0.02-0.3 grams of Na₂S₂O₃·5H₂O, in 10 mL of deionized water. The amounts can be increased proportionally as the volume of deionized water is increased. Generally, for a value *x*, 0.1*x*-0.5*x* grams of Fe(NO₃)₃·9H₂O and 0.02*x*-0.3*x* grams of Na₂S₂O₃·5H₂O can be dissolved in 10x mL of deionized water. At block 220, the operation includes placing a piece of Ni foam into the solution at ambient temperature. For example, the piece of Ni foam can range from 1 cm × 2 cm through 8 cm × 10 cm, which corresponds to a single-side surface area of 2 cm² through 80 cm². Other sizes of Ni foam can also be used. Generally, continuing with the example above using the value x, a piece of Ni foam having single-side surface area between 2x cm² up to 80x cm² can be placed in the solution. Other sizes of Ni foam can be placed in the solution. The Ni foam serves as both the substrate and the Ni source for the growth of S-(Ni,Fe)OOH. At block 230, the operation includes removing the foam after reaction times of one to five minutes at ambient temperature. Generally, within that time range, the foam can be removed after a shorter duration when the amounts of Fe(NO₃)₃·9H₂O and Na₂S₂O₃·5H₂O are higher, and the foam can be removed after a longer duration when the amounts of such chemicals are lower. Optionally, the foam can be washed with deionized water after it is removed from the solution (not illustrated). At block 240, the operation involves collecting the S-(Ni,Fe)OOH catalysts for direct use as OER electrodes. The illustrated synthesis operation is fast (one to five minutes) and is conducted at ambient temperature, which makes the synthesis both time-efficient and energy-efficient. Moreover, the illustrated synthesis operation is scalable and, thus, is suitable for large-scale applications. As previous mentioned in connection with FIG. 1, when the resulting S-(Ni,Fe)OOH catalysts are directly used as OER electrodes in the exemplary seawater electrolyzer of FIG. 1, current densities of 500 and 1000 mA cm⁻² at voltages of 1.837 and 1.951 V, respectively, can be achieved for production of hydrogen, which satisfy industrial criteria.

FIG. 2 described an exemplary process of synthesizing the S-(Ni,Fe)OOH catalysts. The following paragraphs describe the characteristics and performance of the catalyst.

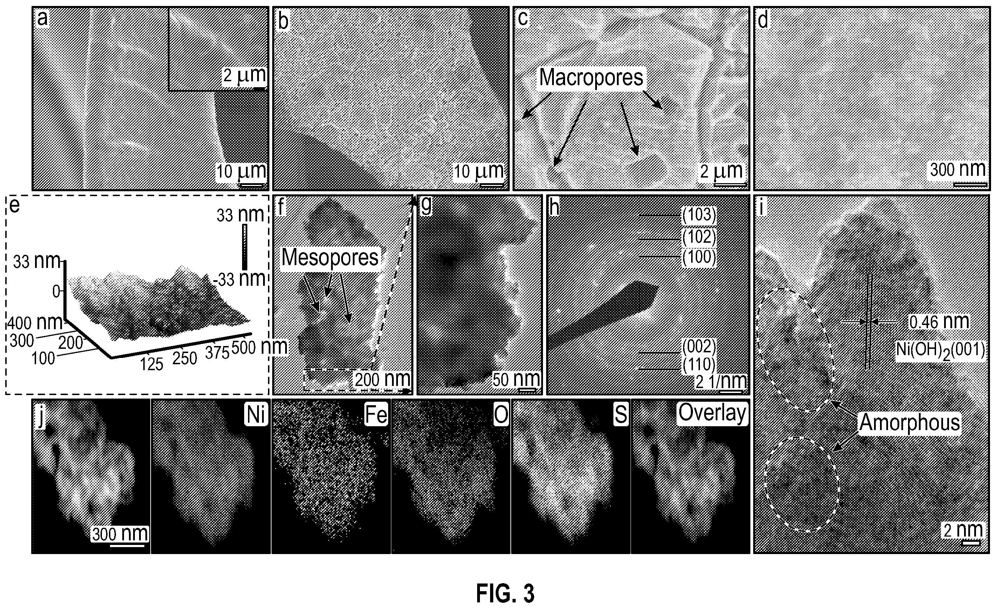

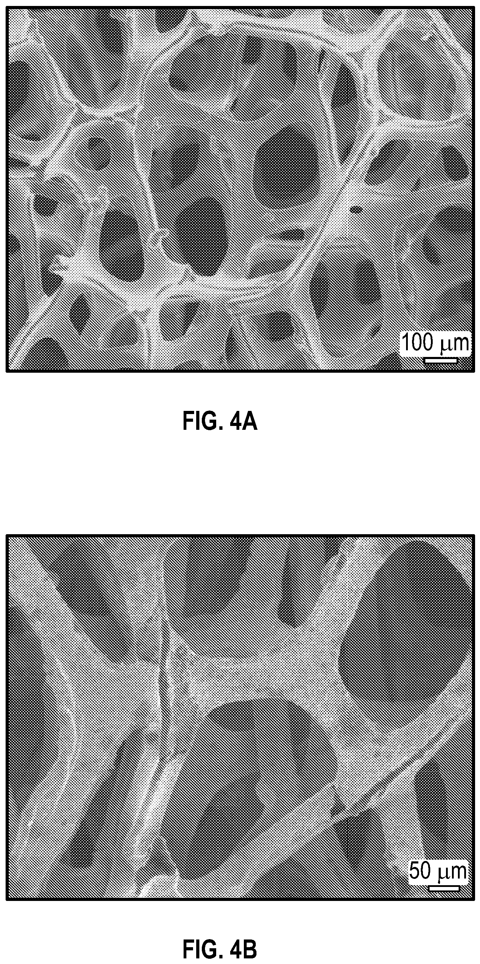

FIGS. 3, 4A, and 4B show images of exemplary surface morphology of the foam before and after the synthesis operation of FIG. 2. The surface morphology images were obtained by scanning electron microscopy (SEM), atomic force microscopy (AFM), and transmission electron microscopy (TEM). In FIG. 3, image (a) is SEM image of Ni foam, images (b)-(d) are SEM images of S-(Ni,Fe)OOH at different magnifications, image (e) is AFM image of 3D surface topography of S-(Ni,Fe)OOH on Ni foam, images (f) and (g) are TEM images, image (h) shows SAED pattern, image (i) is a high-resolution TEM image of S-(Ni,Fe)OOH, and image (j) shows a STEM image and corresponding elemental mapping of Ni, Fe, O, and S for S-(Ni,Fe)OOH.

Image (a) of FIG. 3 and FIG. 4A show that Ni foam before the synthesis operation is highly porous with pore sizes ranging from 100 to 800 µm, and its surface is largely smooth. After a five-minute reaction, the treated Ni foam retains its three-dimensional (3D) skeleton (FIG. 4B), but the surface has been etched into small parts separated by cracks (FIG. 3, image (b)). Low-magnification SEM images in images (c) and (d) of FIG. 3 reveal that the cracked parts are composed of nanoparticles and reveal that there are many macropores several micrometers in size (such as less than ten micrometers) generated on the surface, which may offer efficient channels for electrolyte diffusion. Image (e) of FIG. 3 displays the 3D surface topography of the S-(Ni,Fe)OOH on Ni foam measured by atomic force microscopy (AFM), showing an extremely rough surface with valley areas (dark) and tower areas (bright), which dramatically increases the accessible surface area. Transmission electron microscopy (TEM) images in images (f) and (g) of FIG. 3 further reveal that the S-(Ni,Fe)OOH nanoparticles are highly porous with plenty of mesopores (20 ~ 50 nm in size). Therefore, the synthesis method of FIG. 2 effectuates a surface engineering method that promptly etches the smooth surface of Ni foam into nanoparticle layers with multiple levels of porosity, thus providing more exposed active sites as well as promoting the release of oxygen bubbles from the catalyst surface, both of which are beneficial to the OER process, especially under large current densities. The selected area electron diffraction (SAED) pattern in image (h) of FIG. 3 shows well-defined diffraction rings, which are indexed to the (100), (002), (102), (110), and (103) planes of Ni(OH)₂. From the high-resolution TEM (HRTEM) image of S-(Ni,Fe)OOH in image (i), it can be seen that the nanoparticle includes both crystalline and amorphous parts, generating rich crystalline-amorphous boundaries, which may provide more catalytically active sites for OER catalysis. The clear lattice fringe with an interplanar spacing of 0.46 nm in the crystalline part is assigned to the (001) plane of Ni(OH)₂. Image (j) of FIG. 3 shows the scanning TEM (STEM) and corresponding energy dispersive X-ray spectroscopy (EDS) elemental mapping images of S-(Ni,Fe)OOH, providing further evidence of the porous nanostructure and confirming the existence and generally uniform distribution of elemental Ni, Fe, O, and S in the nanoparticles.

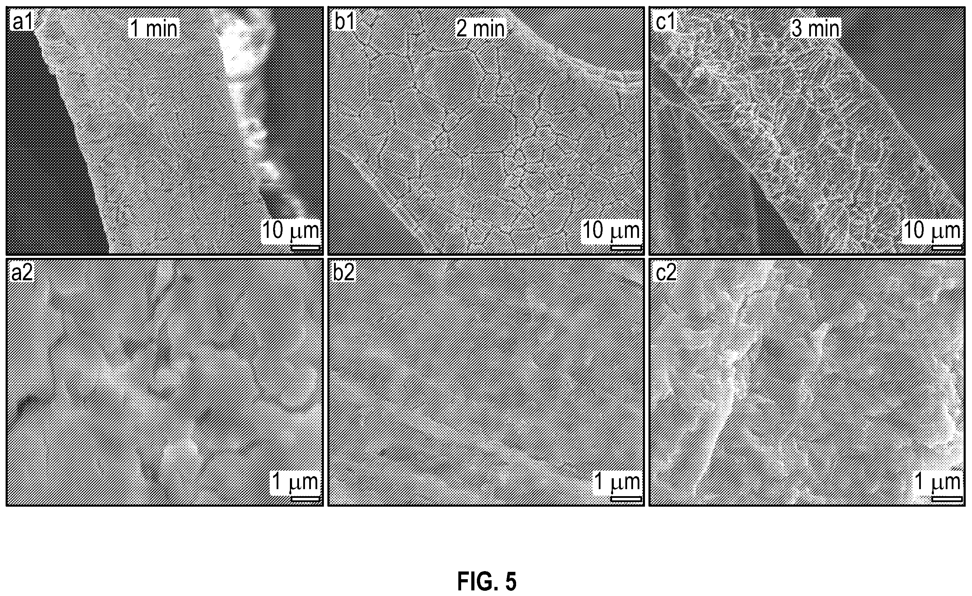

FIG. 5 shows SEM images of the S-(Ni,Fe)OOH electrodes prepared using reaction times of one, two, and three minutes. Images (a1) and (a2) are SEM images of S-(Ni,Fe)OOH electrodes prepared using one-minute reaction times, images (b1) and (b2) are SEM images of S-(Ni,Fe)OOH electrodes prepared using two-minute reaction times, and images (c1) and (c2) are SEM images of S-(Ni,Fe)OOH electrodes prepared using three-minute reaction times. These images show that the Ni-foam surface is quickly etched and becomes increasingly rough with increasing reaction time until many macropores are created in the 5-minute reaction (FIGS. 3, 4A, and 4B).

In the synthesis operation of FIG. 2, reaction times longer than five minutes may cause the foam to become fragile with insufficient mechanical strength. The following paragraphs describe the result of five minutes of reaction time, unless indicated otherwise.

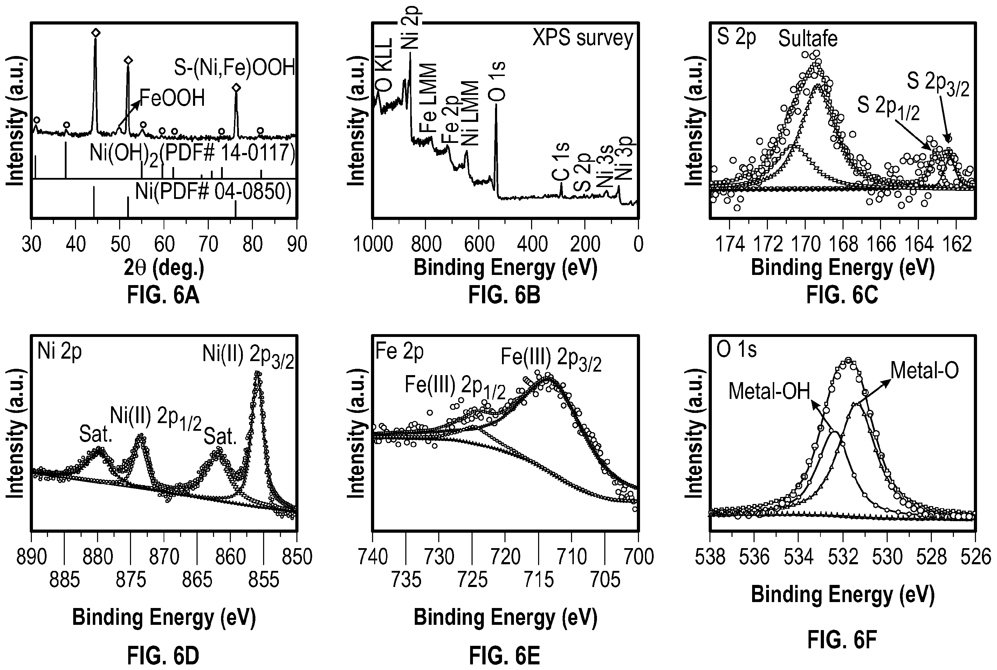

FIGS. 6A-6F show exemplary X-ray diffraction (XRD) pattern of S-(Ni,Fe)OOH and X-ray photoelectron spectroscopy (XPS) measurements. FIG. 6A is a XRD pattern, FIG. 6B is a XPS survey, FIG. 6C is a high-resolution XPS spectra of S 2p, FIG. 6D is a high-resolution XPS spectra of Ni 2p, FIG. 6E is a high-resolution XPS spectra of Fe 2p, and FIG. 6F is a high-resolution XPS spectra of O 1s, for S-(Ni,Fe)OOH.

In FIG. 6A, XRD is used to identify the crystal phase of the treated Ni foam. As shown FIG. 6A, except for the three strong diffraction peaks resulting from the Ni substrate, other peaks are well indexed to Ni(OH)₂ (XRD card number PDF# 14-0117), and the peak at 49.8° is assigned to FeOOH (XRD card number PDF# 76-2301).

FIGS. 6B-6F show X-ray photoelectron spectroscopy (XPS) measurements to investigate the chemical states of each element in the S-(Ni,Fe)OOH catalyst. In FIG. 6B, the XPS survey spectrum verifies the presence of elemental Ni, Fe, O, and S in the S-(Ni,Fe)OOH layer following the surface engineering of the Ni foam. FIG. 6C further shows the high-resolution XPS spectrum of S 2p, in which the two peaks located at 169.3 and 170.6 eV are originated from the residual sulfate groups, and the two small peaks at 162.3 and 163.1 eV correspond to S 2p_{3/2} and S 2p_{1/2} of S²⁻, respectively, demonstrating that S exists both on the surface and in the lattice of S-(Ni,Fe)OOH. The introduced S may reduce the adsorption free energy difference between O* and OH* intermediates on the active sites, which is conducive to the OER activity. The high-resolution XPS spectrum of Ni 2p (FIG. 6D) shows two spin-orbit peaks at 855.8 (Ni 2p_{3/2}) and 873.5 eV (Ni 2p_{1/2}), along with two satellite peaks (identified as "Sat."), which are characteristic of the Ni²⁺ oxidation state. In FIG. 6E, the Fe 2p XPS spectrum displays two peaks at 713.1 eV for Fe 2p_{3/2} and 724.3 eV for Fe 2p_{1/2}, indicating the presence of the Fe³⁺ oxidation state. For the O1s XPS spectrum displayed in FIG. 6F, the two peaks at 531.3 and 532.4 eV are attributed to metal-O and metal-OH, respectively. Therefore, the fast synthesis of FIG. 2 effectively etches the Ni foam surface into a highly porous S-(Ni,Fe)OOH layer, which is composed of Ni(OH)₂ and a small amount of FeOOH, along with S residing on the surface and doped into the lattice.

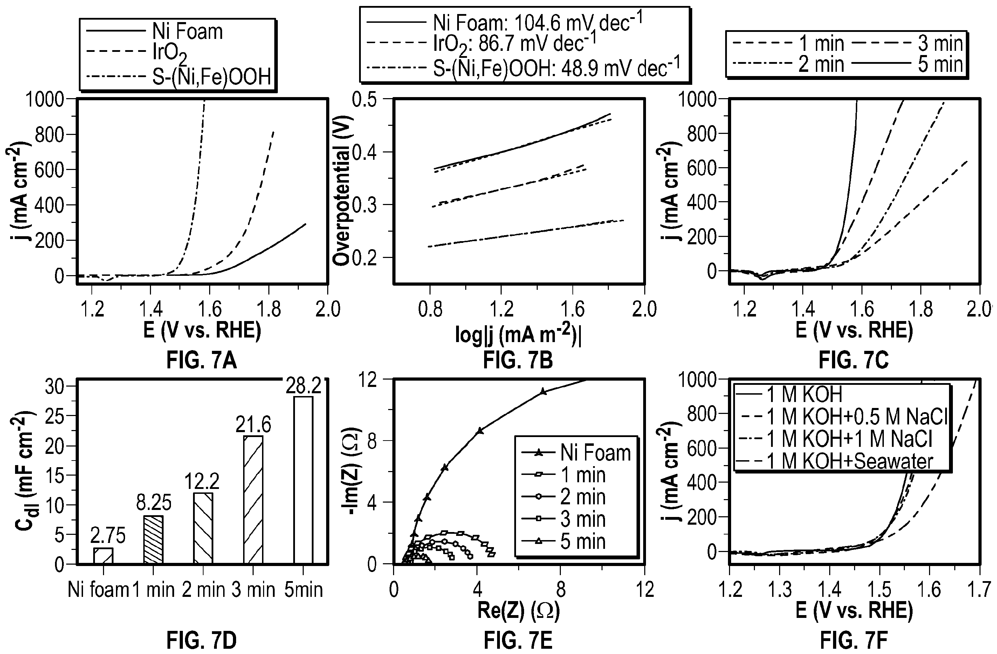

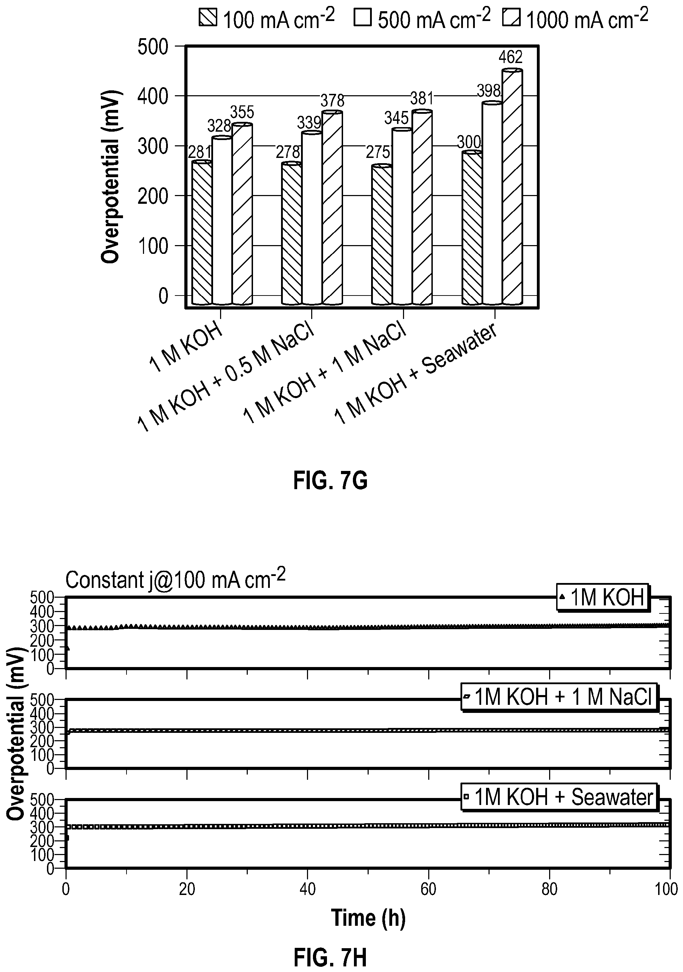

FIGS. 7A-7H show graphs relating to electrocatalytic performance of the catalyst synthesized according to FIG. 2. The performance was assessed by the OER activity of the as-prepared catalysts in 1 M KOH freshwater electrolyte, which was also used for commercial IrO₂ powder loaded on Ni foam as a benchmark for comparison. FIG. 7A shows polarization curves and FIG. 7B shows corresponding Tafel plots of the Ni foam, IrO₂, and S-(Ni,Fe)OOH electrodes. FIGS. 7C-7E show polarization curves, C_{dl} values, and EIS Nyquist plots, respectively, of the S-(Ni,Fe)OOH electrodes prepared using different reaction times. FIG. 7F shows polarization curves and FIG. 7G shows comparison of the overpotentials required to achieve current densities of 100, 500, and 1000 mA cm⁻² for the S-(Ni,Fe)OOH electrode tested in different electrolytes. FIG. 7H shows long-term stability tests at a constant current density of 100 mA cm⁻² for the S-(Ni,Fe)OOH electrode in different electrolytes.

From the OER polarization curves displayed in FIG. 7A, it can be seen that, compared with commercial Ni foam, the S-(Ni,Fe)OOH electrode shows a significant enhancement for OER, and it is also superior to the benchmark of IrO₂. To deliver current densities of 10 and 100 mA cm⁻², the required overpotentials for the S-(Ni,Fe)OOH electrode are below 300 mV at 229 mV and 281 mV, respectively, which are much lower than that of commercial Ni foam (382 and 512 mV) and IrO₂ (313 and 430 mV). At the overpotential of 350 mV, the S-(Ni,Fe)OOH electrode exhibits a large current density up to 930 mA cm⁻², which is about thirty-one times that of the benchmark IrO₂ catalyst, demonstrating very desirable OER activity. In addition, the S-(Ni,Fe)OOH electrode exhibits a smaller Tafel slope of 48.9 mV dec⁻¹ (FIG. 7B) compared with that of Ni foam (104.6 mV dec⁻¹) and IrO₂ (86.7 mV dec⁻¹), suggesting more rapid OER catalytic kinetics.

As shown by FIGS. 7A and 7B, the OER performance of the S-(Ni,Fe)OOH electrode outperforms most other transition-metal (oxy)hydroxide catalysts as well as many non-noble metal catalysts. The synthesis process for the S-(Ni,Fe)OOH catalyst is much more efficient in terms of energy and time than that for any of the other reported OER catalysts, indicating that the synthesis operation of FIG. 2 can efficiently product large-size samples with low energy consumption. Furthermore, the self-supported S-(Ni,Fe)OOH catalyst can be directly utilized as an OER electrode, thus avoiding the use of an expensive polymer binder to immobilize active materials on the substrates, which further simplifies the procedure and lowers the cost for electrode preparation.

Referring to FIGS. 7C and 7D, OER activity is characterized for the S-(Ni,Fe)OOH electrodes prepared using different reaction times in 1 M KOH freshwater electrolyte. Longer reaction time leads to higher OER activity, and the five-minute reaction is the best among the four reaction times. This is because the Ni foam surface becomes more etched with increasing reaction time as shown in FIG. 5, contributing to a rougher and more porous surface with more active sites, which was verified by determination of the electrochemically active surface area (ECSA) through the calculation of double-layer capacitance (C_{dl}) from cyclic voltammetry (CV) curves. As shown in FIG. 7D, the C_{dl} value increases with increasing etching time. The five-minute S-(Ni,Fe)OOH foam has a C_{dl} value of 28.2 mF cm⁻², which is 1.31, 2.31, and 3.42 times that of the 3-, 2-, and 1-minute S-(Ni,Fe)OOH foams, respectively, and more than ten times that of commercial Ni foam (2.75 mF cm⁻²), suggesting a larger ECSA with a higher density of exposed active sites. This indicates further modifying the Ni foam with smaller pores is beneficial to larger surface areas. Additionally, compared with the hydrophobic surface of Ni foam, the S-(Ni,Fe)OOH layer exhibits a favorable hydrophilic feature, which not only benefits electrolyte diffusion but also contributes to the fast release of gas bubbles. This is another reason for the promoted OER activity of the S-(Ni,Fe)OOH catalyst, especially under large current densities. Electrochemical impedance spectroscopy (EIS) Nyquist plots in FIG. 7E further show that the S-(Ni,Fe)OOH catalysts have smaller charge-transfer resistance (R_{ct}) in comparison with commercial Ni foam, and the five-minute reaction foam exhibits the smallest R_{ct} value of 1.2 Ω, demonstrating good electronic conductivity and efficient electron-transport capability.

Referring to FIGS. 7F and 7G, the graphs show evaluation of the OER performance of the S-(Ni,Fe)OOH catalyst in alkaline simulated seawater (1 M KOH plus 0.5 M NaCl and 1 M KOH plus 1 M NaCl) and alkaline natural seawater (1 M KOH plus seawater) electrolytes. As shown in FIG. 7F, the OER activity of the S-(Ni,Fe)OOH catalyst remains more than acceptable in the 1 M KOH plus 0.5 M NaCl electrolyte, requiring overpotentials of 278, 339, and 378 mV to yield current densities of 100, 500, and 1000 mA cm⁻², respectively (FIG. 7G). Even in highly salinity (1 M KOH plus 1 M NaCl), the activity shows no significant degradation, and the catalyst's performance in either of these electrolytes is very close to that in 1M KOH. In the alkaline natural seawater electrolyte (1 M KOH plus seawater), the S-(Ni,Fe)OOH catalyst exhibits some activity decay due to the formation of insoluble precipitates on the electrode surface, which bury some active sites. In this situation, the S-(Ni,Fe)OOH catalyst still delivers current densities of 100, 500, and 1000 mA cm⁻² at overpotentials of 300, 398, and 462 mV, respectively (FIG. 7G). This performance is superior to that of most previously reported non-precious metal OER catalysts in alkaline salty water electrolyte, including superior to the performance of the highly efficient NiFe layer double hydroxide (LDH) OER catalyst.

FIG. 7H shows electrochemical stability of the catalyst. The stability of the S-(Ni,Fe)OOH catalyst is evaluated by performing long-term stability tests under a constant current density of 100 mA cm⁻² in different electrolytes. As shown in FIG. 7H, the real-time potential remains highly stable with negligible increase throughout one-hundred hours of continuous operation in either the alkaline highly salty water or the natural seawater electrolyte, demonstrating OER durability, which mainly originates from the robust contact between the S-(Ni,Fe)OOH layer and the Ni foam, as well as the highly porous nanostructure with a good hydrophilic feature.

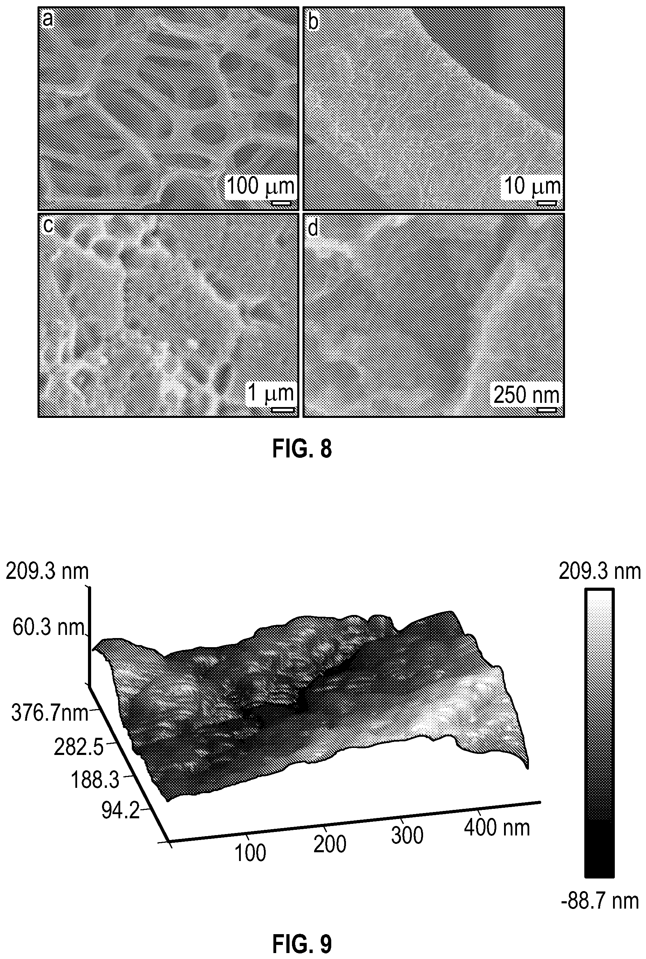

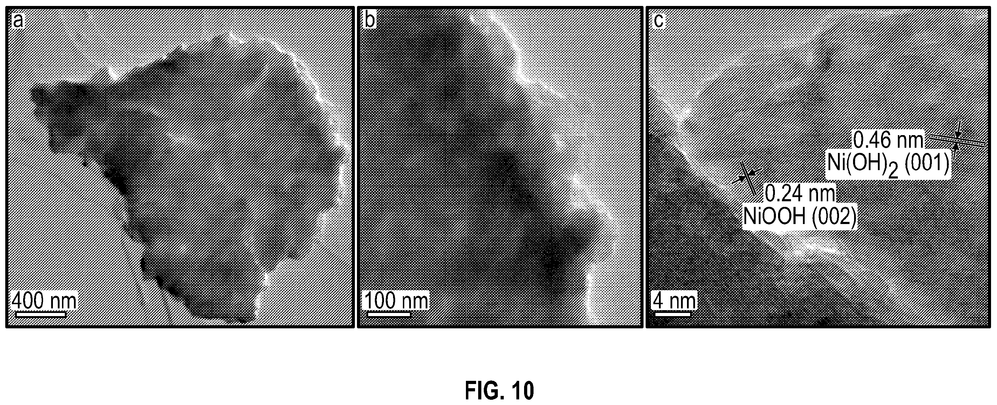

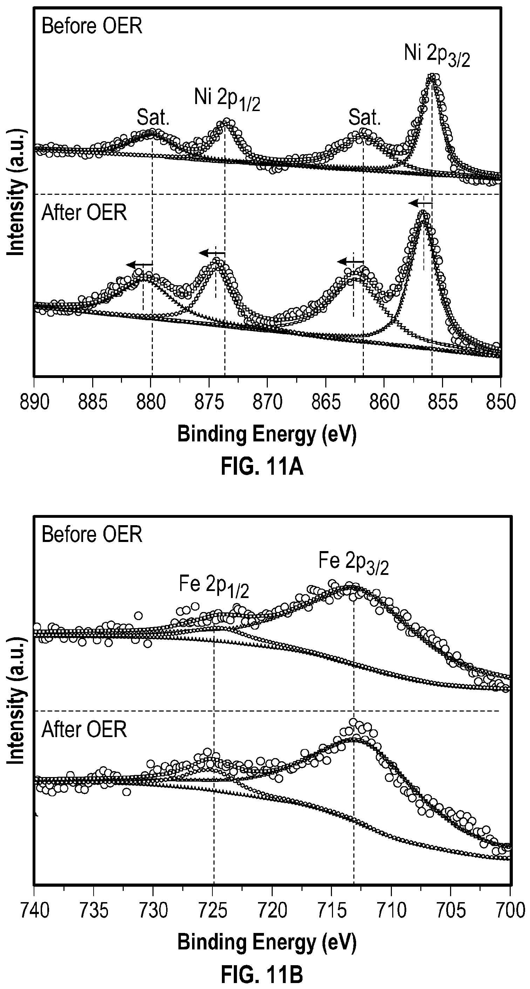

FIGS. 8-10 show surface morphology and nanostructure of the S-(Ni,Fe)OOH catalyst after stability testing in 1 M KOH plus seawater electrolyte. FIG. 8 shows SEM images of S-(Ni,Fe)OOH at low and high magnifications after OER stability testing in 1 M KOH plus seawater. FIG. 9 shows an AFM image of surface topography of S-(Ni,Fe)OOH on Ni foam after OER stability testing in 1 M KOH plus seawater. FIG. 8 and FIG. 9 show that the 3D rough and porous nanostructures of the S-(Ni,Fe)OOH catalyst are well preserved after long-term stability testing. FIG. 10 shows TEM images of S-(Ni,Fe)OOH after OER stability testing in 1 M KOH plus seawater, and these also show the presence of porous nanoparticles after stability testing, attesting to the catalyst's structural stability. Notably, from the high resolution TEM image shown in image (c) of FIG. 10, the lattice fringes from the (001) plane of Ni(OH)₂ can be detected, as shown in image (i) of FIG. 3, as well as some newly generated lattice fringes from the (002) plane of NiOOH. The generated NiOOH species is mostly derived from the oxidation of Ni(OH)₂ during the OER process, which was further confirmed by high-resolution XPS results obtained before and after OER stability testing, as shown in FIG. 11.

FIG. 11A shows high-resolution XPS spectra of Ni 2p, and FIG. 11B shows high-resolution XPS spectra of Fe 2p, for S-(Ni,Fe)OOH before and after OER stability testing in 1 M KOH plus seawater. As shown in the high-resolution XPS spectra of Ni 2p in FIG. 11A, all four peaks shift toward higher binding energy after OER testing, indicating the oxidation of Ni²⁺ to the higher valence state of Ni³⁺, which is due to the transformation of Ni(OH)₂ into NiOOH during the OER process. There is no significant change in the Fe 2p XPS spectra after OER testing, as shown in FIG. 11B, indicating the stable presence of FeOOH during the OER process. Therefore, the real active species of the S-(Ni,Fe)OOH catalyst during the OER process should be NiOOH and FeOOH.

The above electrochemical tests demonstrate that the S-(Ni,Fe)OOH catalyst is active and stable for OER in both the freshwater and seawater electrolytes. The performance can be mainly attributed to the following aspects: (1) the highly porous S-(Ni,Fe)OOH layer has multiple levels of porosity, which provides a large surface area and a high density of active sites for the catalytic reaction; (2) the hydrophilic S-(Ni,Fe)OOH layer with pores of different sizes contributes to efficient electrolyte diffusion and the fast release of gas bubbles, both of which are crucial to achieve large current density; (3) the introduced S on the surface and in the lattice of S-(Ni,Fe)OOH may decrease the adsorption free energy difference between the O* and OH* intermediates, thus accelerating the OER process; and (4) directly etching the commercial Ni foam into the S-(Ni,Fe)OOH layer guarantees strong adhesion between the active material and the substrate, which not only reduces the contact resistance for rapid charge transfer, but also promotes mechanical and electrocatalytic stability.

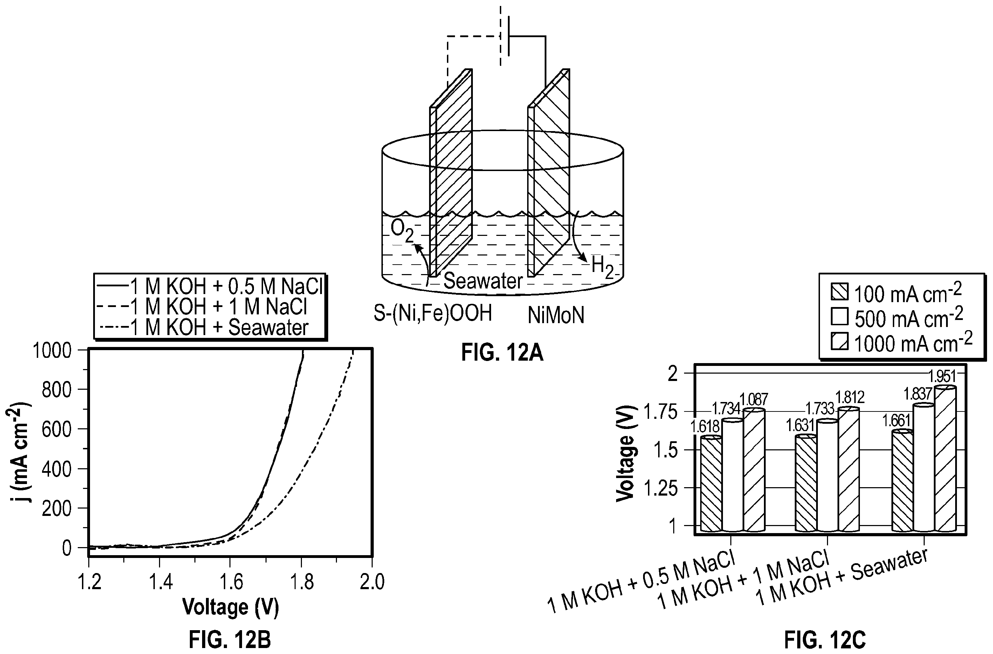

Accordingly, an exemplary method of synthesizing the S-(Ni,Fe)OOH catalysts has been described, and the characteristics and performance of the catalyst have also been described. The following will describe the performance of the two-electrode electrolyzer of FIG. 1. The performance graphs are shown in FIGS. 12A-12D.

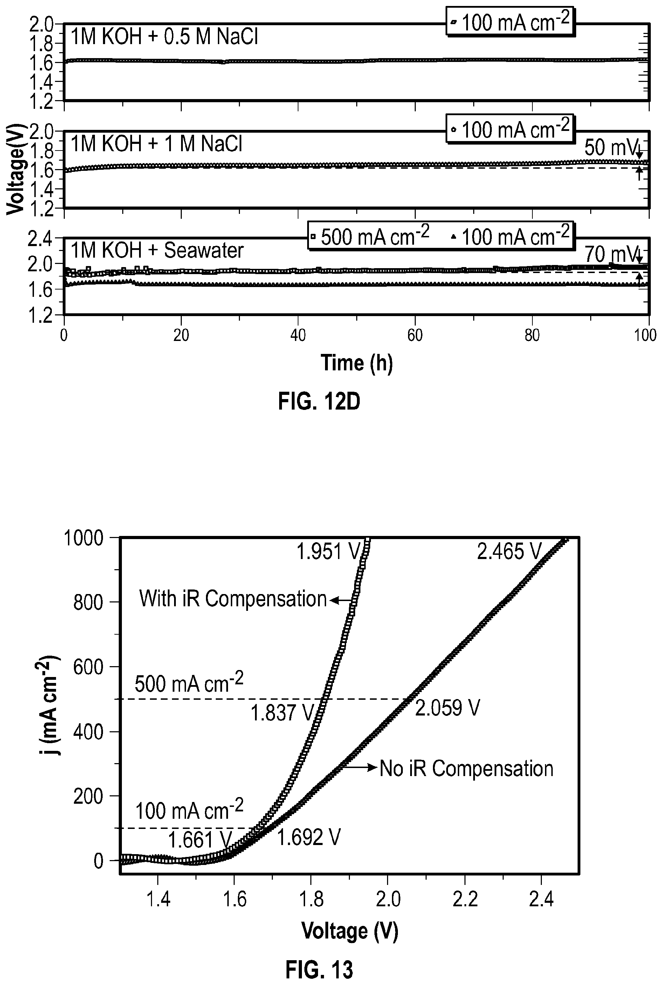

In the configuration of FIG. 1, which is also shown in FIG. 12A, the S-(Ni,Fe)OOH electrode (anode) is coupled with a HER catalyst of NiMoN nanowire arrays supported on Ni foam (cathode). FIG. 12B shows polarization curves and FIG. 12C shows comparison of the required voltages at current densities of 100, 500, and 1000 mA cm⁻² for the NiMoN and S-(Ni,Fe)OOH electrolyzer in different electrolytes. FIG. 12D shows long-term stability tests conducted at constant current densities of 100 and 500 mA cm⁻² in different electrolytes.

As shown in FIG. 12B, the electrolyzer of FIG. 1 exhibits desirable activity for overall seawater splitting in the two alkaline simulated seawater electrolytes. In 1 M KOH plus 1 M NaCl, current densities of 100, 500, and 1000 mA cm⁻² are achieved at voltages of 1.631, 1.733, and 1.812 V, respectively, at ambient temperature (FIG. 12C), which are even lower than the coupled benchmarks of IrO₂/Pt in 1 M KOH electrolyte. In the alkaline natural seawater electrolyte (1 M KOH plus seawater), the activity is slightly worse but is still more than acceptable (FIG. 12B). As shown in FIG. 12C, to deliver current densities of 100 and 500 mA cm⁻², the required voltages are 1.661 and 1.837 V, respectively. Even at a large current density of 1000 mA cm⁻², the corresponding voltage is only 1.951 V. Thus, the corresponding voltage is less than 2 V. This performance is better than that of many previously reported alkaline electrolyzers in 1 M KOH electrolyte, such as Ni₃N-VN with Ni₂P-VP₂, NiMo with NiFe LDH, NiFeP with NiFeOₓ, and the bifunctional-catalyst-based electrolyzers of MoS₂-NiS₂/N-doped graphene foam and NiFeRu LDH.

Seawater electrolysis was also conducted in 1M KOH plus seawater at ambient temperature without iR compensation for comparison. FIG. 13 shows polarization curves of S-(Ni,Fe)OOH with NiMoN for overall seawater splitting with and without iR compensation in 1 M KOH plus seawater at ambient temperature. The graph of FIG. 13 indicates inferior performance without iR compensation compared to that with iR compensation. However, the electrolyzer of FIG. 1 also demonstrates very desirable durability. Under a constant current density of 100 mA cm⁻², the measured voltages keep highly stable in both 1 M KOH plus 0.5 M NaCl and 1 M KOH plus seawater electrolytes (FIG. 12D). In the highly salty water electrolyte (1 M KOH plus 1 M NaCl), the voltage displays a slight increase of 50 mV after 100 h operation. FIG. 12D also illustrates stability at a large current density of 500 mA cm⁻² in 1 M KOH plus seawater electrolyte. As shown in FIG. 12D, the voltage shows only a slight increase of ~70 mV after 100 h electrolysis and remains under 2 V, for a low degradation rate of 0.7 mV h⁻¹ (less than 1 mV h⁻¹), which is mainly due to the large adsorption of bubbles blocking some active sites. Overall, the electrolyzer of FIG. 1 has very desirable activity and stability, showing great potential for rapid hydrogen production through seawater electrolysis.

Accordingly, a cost-effective and industrially compatible method to convert readily available Ni foam into robust OER catalysts for high-performance seawater electrolysis has been described above. Benefiting from the advantages of a large surface area with a high density of active sites, a hydrophilic feature for electrolyte diffusion, a small charge-transfer resistance, and the fast release of gas bubbles, the synthesized S-(Ni,Fe)OOH catalyst exhibits very desirable OER performance with low overpotentials of 300 and 398 mV required to achieve current densities of 100 and 500 mA cm⁻², respectively, in alkaline natural seawater electrolyte. An efficient alkaline electrolyzer is disclosed by pairing the OER catalyst with a good HER catalyst, achieving current densities of 500 and 1000 mA cm⁻² at low voltages of 1.837 and 1.951 V, respectively. The low cost of the disclosed synthesis method, as well as the desirable performance of the resulting catalyst, advances the development of the hydrogen economy and of industrial seawater desalination.

Certain embodiments of the present disclosure may include some, all, or none of the above advantages and/or one or more other advantages readily apparent to those skilled in the art from the drawings, descriptions, and claims included herein. Moreover, while specific advantages have been enumerated above, the various embodiments of the present disclosure may include all, some, or none of the enumerated advantages and/or other advantages not specifically enumerated above.

The phrases "in an embodiment," "in embodiments," "in various embodiments," "in some embodiments," or "in other embodiments" may each refer to one or more of the same or different embodiments in accordance with the present disclosure. The phrases "in an aspect," "in aspects," "in various aspects," "in some aspects," or "in other aspects" may each refer to one or more of the same or different aspects in accordance with the present disclosure. A phrase in the form "A or B" means "(A), (B), or (A and B)." A phrase in the form "at least one of A, B, or C" means "(A); (B); (C); (A and B); (A and C); (B and C); or (A, B, and C)."

It should be understood that the foregoing description is only illustrative of the present disclosure. Various alternatives and modifications can be devised by those skilled in the art without departing from the disclosure. Accordingly, the present disclosure is intended to embrace all such alternatives, modifications, and variances. The embodiments described with reference to the attached drawing figures are presented only to demonstrate certain examples of the disclosure.

## Claims

1. A method for ambient-temperature synthesis of catalysts for water electrolysis, the method comprising:
dissolving amounts of Fe(NO₃)₃·9H₂O and Na₂S₂O₃·5H₂O in deionized water at ambient temperature to form a solution;
placing Ni foam into the solution, the Ni foam serving as a substrate and a Ni source for growth of sulfur-doped (Ni,Fe)OOH (S-(Ni,Fe)OOH) catalysts;
leaving the Ni foam in the solution at ambient temperature for a duration between one minute and five minutes to provide a treated foam, the S-(Ni,Fe)OOH catalysts growing on the substrate during the duration; and
removing the treated foam from the solution after the duration.

2. The method according to claim 1, further comprising:
collecting the S-(Ni,Fe)OOH catalysts; and
directly using the collected S-(Ni,Fe)OOH catalysts as oxygen evolution reaction (OER) electrodes.

3. The method according to claim 1, further comprising etching a smooth surface of the Ni foam into nanoparticle layers with multiple levels of porosity.

4. The method according to claim 3, wherein surfaces of the treated foam include cracks having nanoparticles and having macropores that are less than ten micrometers in size.

5. The method according to claim 4, wherein the nanoparticles are porous and have mesopores of about 20 nm - 50 nm in size.

6. The method according to claim 1, wherein in the treated foam, sulfur exists on the surface of and in a lattice of the S-(Ni,Fe)OOH catalysts.

7. The method according to claim 1, further comprising etching a surface of the Ni foam into a porous S-(Ni,Fe)OOH layer, the layer having Ni(OH)₂ and FeOOH and having sulfur residing on the surface and doped into a lattice of the layer.

8. The method according to claim 7, wherein the S-(Ni,Fe)OOH layer is hydrophilic and contributes to release of gas bubbles during electrolysis.

9. The method according to claim 1, wherein dissolving amounts of Fe(NO₃)₃·9H₂O and Na₂S₂O₃·5H₂O in deionized water at ambient temperature includes dissolving 0.1x-0.5x grams of Fe(NO₃)₃·9H₂O and 0.02x-0.3x grams of Na₂S₂O₃·5H₂O in 10*x* mL of deionized water, for a value x.

10. A water electrolyzer comprising:
an anode comprising a nickel foam supported sulfur-doped Ni/Fe (oxy)hydroxide (S-(Ni,Fe)OOH) catalyst; and
a cathode formed by NiMoN nanowire arrays supported on Ni foam;
wherein a surface of the nickel foam is etched into a porous layer comprising nanoparticles of the (S-(Ni,Fe)OOH) catalyst, wherein the layer is hydrophilic and comprises Ni(OH)₂ and FeOOH with the sulfur residing on a surface of and doped into a lattice of the layer, and wherein the nanoparticles of the (S-(Ni,Fe)OOH) catalyst include both crystalline and amorphous parts.

11. The water electrolyzer according to claim 10, further comprising an alkaline natural seawater electrolyte.

12. The water electrolyzer according to claim 11, wherein a voltage of less than two volts between the anode and the cathode provides a current density of 1000 mA cm⁻² optionally wherein the voltage is approximately 1.951 volts.

13. The water electrolyzer according to claim 11, wherein a voltage between the anode and the cathode for providing a current density of 500 mA cm⁻² remains below 2 volts throughout one-hundred hours of continuous water electrolysis.

14. The water electrolyzer according to claim 13, wherein the voltage for providing the current density of 500 mA cm⁻² changes by less than 1 mV per hour during the one-hundred hours of continuous water electrolysis.

15. The water electrolyzer according to claim 11, wherein the S-(Ni,Fe)OOH electrode is capable of delivering at least one of: a current density of 100 mA cm⁻² at an overpotential of 300 mV, a current density of 500 mA cm⁻² at an overpotential of 398 mV, or a current density of 1000 mA cm⁻² at an overpotential of 462 mV.

## Patentansprüche

1. Verfahren zur Synthese von Katalysatoren für die Wasserelektrolyse bei Umgebungstemperatur, das Verfahren umfassend:
Lösen von Mengen an Fe(NO₃)₃·9H₂O und Na₂S₂O₃·5H₂O in entionisiertem Wasser bei Umgebungstemperatur, um eine Lösung zu bilden;
Einbringen von Ni-Schaum in die Lösung, wobei der Ni-Schaum als Substrat und als Ni-Quelle für das Wachstum von schwefeldotierten (Ni,Fe)OOH-Katalysatoren (S-(Ni,Fe)OOH) dient;
Belassen des Ni-Schaums in der Lösung bei Umgebungstemperatur für eine Dauer zwischen einer Minute und fünf Minuten, um einen behandelten Schaum bereitzustellen, wobei die S-(Ni,Fe)OOH-Katalysatoren während dieser Dauer auf dem Substrat wachsen; und
Entfernen des behandelten Schaums aus der Lösung nach Ablauf der Dauer.

2. Verfahren nach Anspruch 1, ferner umfassend:
Sammeln der S-(Ni,Fe)OOH-Katalysatoren; und
direktes Verwenden der gesammelten S-(Ni,Fe)OOH-Katalysatoren als Elektroden für die Sauerstoffentwicklungsreaktion (OER).

3. Verfahren nach Anspruch 1, ferner umfassend Ätzen einer glatten Oberfläche des Ni-Schaums zu Nanopartikelschichten mit mehreren Porositätsstufen.

4. Verfahren nach Anspruch 3, wobei Oberflächen des behandelten Schaums Risse aufweisen, die Nanopartikel und Makroporen mit einer Größe von weniger als zehn Mikrometern aufweisen.

5. Verfahren nach Anspruch 4, wobei die Nanopartikel porös sind und Mesoporen mit einer Größe von etwa 20 nm bis 50 nm aufweisen.

6. Verfahren nach Anspruch 1, wobei in dem behandelten Schaum Schwefel auf der Oberfläche und in einem Gitter der S-(Ni,Fe)OOH-Katalysatoren vorhanden ist.

7. Verfahren nach Anspruch 1, ferner umfassend Ätzen einer Oberfläche des Ni-Schaums zu einer porösen S-(Ni,Fe)OOH-Schicht, wobei die Schicht Ni(OH)₂ und FeOOH aufweist und wobei Schwefel auf der Oberfläche vorhanden und in ein Gitter der Schicht dotiert ist.

8. Verfahren nach Anspruch 7, wobei die S-(Ni,Fe)OOH-Schicht hydrophil ist und zur Freisetzung von Gasblasen während der Elektrolyse beiträgt.

9. Verfahren nach Anspruch 1, wobei das Lösen von Mengen an Fe(NO₃)₃·9H₂O und Na₂S₂O₃·5H₂O in entionisiertem Wasser bei Umgebungstemperatur das Lösen von 0,1*x*-0,5*x* Gramm Fe(NO₃)₃·9H₂O und 0,02*x*-0,3*x* Gramm Na₂S₂O₃·5H₂O in 10*x* mL entionisiertem Wasser für einen Wert *x* beinhaltet.

10. Wasserelektrolyseur, umfassend:
eine Anode, umfassend einen auf Nickelschaum getragenen schwefeldotierten Ni/Fe-(Oxy)hydroxid-Katalysator (S-(Ni,Fe)OOH); und
eine Kathode, die durch auf Ni-Schaum getragene NiMoN-Nanodrahtarrays gebildet ist;
wobei eine Oberfläche des Nickelschaums zu einer porösen Schicht geätzt ist, die Nanopartikel des (S-(Ni,Fe)OOH)-Katalysators umfasst, wobei die Schicht hydrophil ist und Ni(OH)₂ und FeOOH umfasst, wobei der Schwefel auf einer Oberfläche der Schicht vorhanden und in ein Gitter der Schicht dotiert ist, und wobei die Nanopartikel des (S-(Ni,Fe)OOH)-Katalysators sowohl kristalline als auch amorphe Teile beinhalten.

11. Wasserelektrolyseur nach Anspruch 10, ferner umfassend einen alkalischen natürlichen Meerwasserelektrolyten.

12. Wasserelektrolyseur nach Anspruch 11, wobei eine Spannung von weniger als zwei Volt zwischen der Anode und der Kathode eine Stromdichte von 1000 mA cm⁻² bereitstellt, wobei die Spannung optional etwa 1,951 Volt beträgt.

13. Wasserelektrolyseur nach Anspruch 11, wobei eine Spannung zwischen der Anode und der Kathode zur Bereitstellung einer Stromdichte von 500 mA cm⁻² während einhundert Stunden kontinuierlicher Wasserelektrolyse unter 2 Volt bleibt.

14. Wasserelektrolyseur nach Anspruch 13, wobei sich die Spannung zur Bereitstellung der Stromdichte von 500 mA cm⁻² bittewährend der einhundert Stunden kontinuierlicher Wasserelektrolyse um weniger als 1 mV pro Stunde ändert.

15. Wasserelektrolyseur nach Anspruch 11, wobei die S-(Ni,Fe)OOH-Elektrode in der Lage ist, mindestens eines der folgenden bereitzustellen: eine Stromdichte von 100 mA cm⁻² bei einer Überspannung von 300 mV, eine Stromdichte von 500 mA cm⁻² bei einer Überspannung von 398 mV oder eine Stromdichte von 1000 mA cm⁻² bei einer Überspannung von 462 mV.

## Revendications

1. Procédé de synthèse à température ambiante de catalyseurs pour l'électrolyse de l'eau, le procédé comprenant :
la dissolution de quantités de Fe(NO₂)₃·9H₂O et de Na₂S₂O₃·5H₂O dans de l'eau déionisée à température ambiante pour former une solution ;
le placement d'une mousse de Ni dans la solution, la mousse de Ni servant de substrat et de source de Ni pour le développement de catalyseurs (Ni,Fe)OOH dopés au soufre, (S-(Ni,Fe)OOH) ;
le fait de laisser la mousse de Ni dans la solution à température ambiante pendant une durée comprise entre une minute et cinq minutes afin de fournir une mousse traitée, les catalyseurs S-(Ni,Fe)OOH se développant sur le substrat pendant la durée ; et
le retrait de la mousse traitée de la solution à l'issue de la durée.

2. Procédé selon la revendication 1, comprenant en outre :
la collecte des catalyseurs S-(Ni,Fe)OOH ; et
l'utilisation directe des catalyseurs S-(Ni,Fe)OOH collectés comme électrodes de réaction de dégagement d'oxygène (OER).

3. Procédé selon la revendication 1, comprenant en outre la gravue d'une surface lisse de la mousse de Ni pour former des couches de nanoparticules avec de multiples niveaux de porosité.

4. Procédé selon la revendication 3, dans lequel les surfaces de la mousse traitée comprennent des fissures présentant des nanoparticules et présentant des macropores dont la taille est inférieure à dix micromètres.

5. Procédé selon la revendication 4, dans lequel les nanoparticules sont poreuses et présentent des mésopores de la taille est comprise entre environ 20 nm et 50 nm.

6. Procédé selon la revendication 1, dans lequel, dans la mousse traitée, du soufre est présent sur la surface et dans un réseau des catalyseurs S-(Ni,Fe)OOH.

7. Procédé selon la revendication 1, comprenant en outre la gravure d'une surface de la mousse de Ni pour former une couche de S-(Ni,Fe)OOH poreuse, la couche présentant du Ni(OH)₂ et du FeOOH, et ayant du soufre résidant à la surface et dopé dans le réseau de la couche.

8. Procédé selon la revendication 7, dans lequel la couche de S-(Ni,Fe)OOH est hydrophile et contribue à la libération de bulles de gaz pendant l'électrolyse.

9. Procédé selon la revendication 1, dans lequel la dissolution de quantités de Fe(NO₃)₃·9H₂O et de Na₂S₂O₃·5H₂O dans de l'eau déionisée à température ambiante comprend la dissolution de 0,1*x* à 0,5*x* grammes de Fe(NO₃)₃·9H₂O et de 0,02*x* à 0,3*x* grammes de Na₂S₂O₃·5H₂O dans 10*x* ml d'eau déionisée, pour une valeur *x*.

10. Électrolyseur d'eau, comprenant :
une anode comprenant un catalyseur à base d'(oxy)hydroxyde de Ni/Fe dopé au soufre, (S-(Ni,Fe)OOH), supporté sur une mousse de nickel ; et
une cathode formée par des réseaux de nanofils de NiMoN supportés sur une mousse de Ni ;
dans lequel la surface de la mousse de nickel est gravée pour former une couche poreuse comprenant des nanoparticules du catalyseur (S-(Ni,Fe)OOH), dans laquelle la couche est hydrophile et comprend du Ni(OH)₂ et du FeOOH, le soufre résidant sur la surface de la couche et étant dopé dans le réseau de la couche, et dans laquelle les nanoparticules du catalyseur (S-(Ni,Fe)OOH) comprennent à la fois des parties cristallines et amorphes.

11. Électrolyseur d'eau selon la revendication 10, comprenant en outre un électrolyte alcalin à l'eau de mer naturelle.

12. Électrolyseur d'eau selon la revendication 11, dans lequel une tension inférieure à deux volts entre l'anode et la cathode fournit une densité de courant de 1 000 mA cm⁻², la tension pouvant éventuellement être d'environ 1,951 volt.

13. Électrolyseur d'eau selon la revendication 11, dans lequel une tension entre l'anode et la cathode pour fournir une densité de courant de 500 mA cm⁻² reste inférieure à 2 volts pendant cent heures d'électrolyse en continu de l'eau.

14. Électrolyseur d'eau selon la revendication 13, dans lequel la tension pour fournir la densité de courant de 500 mA cm⁻² varie de moins de 1 mV par heure au cours des cent heures d'électrolyse en continu de l'eau.

15. Électrolyseur d'eau selon la revendication 11, dans lequel l'électrode S-(Ni,Fe)OOH est capable de fournir au moins l'une parmi : une densité de courant de 100 mA cm⁻² à une surtension de 300 mV, une densité de courant de 500 mA cm⁻² à une surtension de 398 mV, ou une densité de courant de 1 000 mA cm⁻² à une surtension de 462 mV.
